# EUROPÄISCHE PATENTANMELDUNG

(11) **EP 1 758 333 A1**
(43) Veröffentlichungstag der Anmeldung: **28.02.2007**
(21) Anmeldenummer: 05018340.9
(22) Anmeldetag: 24.08.2005
(51) Int. Cl.: H04L 29/06

(54) **Verfahren zur Manipulation von Sprachpaketen in einem IP-Gateway**

(71) Anmelder: Siemens Schweiz AG, 8047 Zürich (CH)
(72) Erfinder: Goldstein, Peter, 8800 Thalwil (CH)
(74) Vertreter: Kley, Hansjörg

(57) **Zusammenfassung**

An einem Netzübergang in einem IP-Gateway (IP) zwischen zwei IP-Netzen kann die Notwendigkeit bestehen eine oder mehrere der folgenden Funktionen durchzuführen:
- Transkodieren : Codec X <- -> Codec Y;
- Paketierung ändern, z.B. 10 ms <==> 20 ms; usw.
Diese Funktionen sind in Abhängigkeit der Verkehrsbeziehung auszuüben. Dazu wird ein Verfahren vorgeschlagen das eine dem IP-Gateway (ALG) zugeordnete Datenbasis vorsieht, die zu vorgegebenen IP-Adressen der Sprachpakete definiert, welche auszuführenden Manipulationen durch eine Sprachverarbeitungsfunktionen an den betreffenden Sprachpaketen auszuführen sind.

## Beschreibung

Die vorliegende Erfindung betrifft ein Verfahren zur Manipulation von Sprachpaketen in einem IP-Gateway gemäss dem Oberbegriff des patentanspruchs 1.

Im folgenden wird anstelle einer deutschen Nichtfachsprache zur Vermeidung die englisch-sprachige Nomenklatur aus den Normen der ITU-T und der IETF benutzt, wie z.B. «IP-Gateway», «Border Gateway» oder «Application Level Gateway». Dadurch lassen sich Unklarheiten vermeiden. Ebenso werden allgemein bekannte kurze englischsprachige Begriffe anstelle einer deutschen Nichtfachsprache verwendet wie z.B. «Create Table», «Forwarding» usw. Eine Liste der verwendeten Abkürzungen und Begriffe am Schluss dieses Dokumentes ist integraler Bestandteil dieser Schrift.

Die vorliegende Erfindung betrifft das Gebiet von Sprachverbindungen über mehrere IP-basierte Netze und deren Netzübergänge. An einem Netzübergang kann die Notwendigkeit bestehen eine oder mehrere der folgenden Funktionen durchzuführen:
- Transkodieren : Codec x <- -> Codec Y;
- Paketierung ändern, z.B. 10 ms <==> 20 ms;
- Unterstützen der Tandem Free Operation (TFO) und anderer in-band Mechanismen zur Erhöhung der Sprachqualität durch Vermeiden überflüssiger Transkodierungen;
- Unterstützen/erkennen von Fax, Sprachband-Daten und Text Telefon;
- Unterstützen/erkennen von In-band Tonsignalen;
- Pegelanpassung.
   Als Beispiel der vorgenannten Transkodierung sei hier angegeben: G.711 -> G.729, dabei bedeuten:
   ITU-T G.711:
   «Pulse code modulation (PCM) of voice frequencies».
ITU-T G.729:
«Coding of speech at 8 kbit/s using conjugate-structure algebraic-code-excited linear prediction (CS-ACELP)»
«Tandem Free Operation» bedeutet, dass auf eine Transkodierung aufgrund einer identischen Kodierung im Ursprung und Ziel, z.B. GSM - -> GSM verzichtet werden kann.

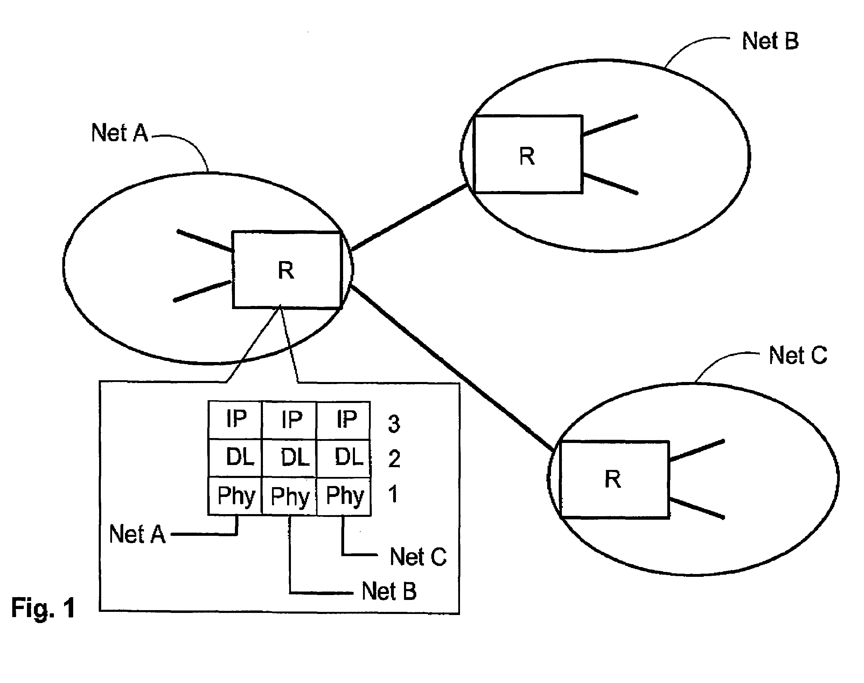

Zur Vermeidung von Missverständnissen wird noch folgende Unterscheidung der Begriffe an dieser Stelle wiederholt:
i) Unter «Voice over Internet» wird das Telefonieren über das öffentliche Internet verstanden, die Border Gateway machen lediglich eine Umsetzung auf den unteren Schichten (lower layers) ohne den Inhalt der übermittelten Pakete in irgendeiner weise zu berücksichtigen. Dieser einfache Mechanismus ist in der Figur 1 dargestellt, mit den zahlen 1, 2 und 3 sind die betreffenden Schichten nummeriert. Die IP-Pakete werden tel quel vom Netz Net A zum Netz Net B oder Net C weitergeleitet, ohne dass die Anwenderinformation manipuliert wird.
ii) «VoIP» dagegen bedeutet, dass die Übertragung im Backbone eines Carriers mit bestimmten Qualitätsmerkmalen erfolgt, die bekannt sind unter QoS und «Carrier Grade Service». Im Rahmen von Next Generation Network NGN wurde bei ITU-T ein Work Item «IP2IP Gateway» mit dem Fokus Sprache initiiert.

Die grundlegenden Funktionen eines Border Gatways sind dem RFC 1771 [1] zu entnehmen, wo ein Border Gatway Protocol BGP spezifiziert ist. Welche Regeln im einzelnen mit dem Protokoll BGP implementiert werden können oder eben nicht implementiert werden können, ist dem Dokument RFC 1772 [2] zu entnehmen.

Eine gezielte Manipulation der zu übertragenden Sprachpakete im Border Gateway ist bei Voice over Internet kein Thema, da keine Qualitätsansprüche zu befriedigen sind. Im Fall des Dienstes «VoIP» ist diese Umsetzung und Manipulation der Sprache enthaltenden IP-Pakete gefordert aber noch nicht gelöst. Die vorgenannten Dokumente [1] und [2] beinhalten keine Angaben zu Funktionen wie
- Transkodieren,
- Paketierung ändern,
- Unterstützen der Tandem free Operation (TFO),
- usw.

Der vorliegenden Erfindung liegt daher die Aufgabe zugrunden, für den Dienst «VoIP» ein Verfahren zur Manipulation von Sprachpaketen in einem IP-Gateway anzugeben, bei dem Sprache enthaltende IP-Pakete gezielt abhängig von der betreffenden Verkehrsbeziehung manipuliert werden können.

Diese Aufgabe wird erfindungsgemäss durch das im Patentanspruch 1 angegebene Verfahren gelöst.

Vorteilhafte Ausgestaltungen der Erfindung sind in weiteren Ansprüchen angegeben.

Gemäss dem erfindungsgemässen Verfahren, wonach im IP-Gateway eine Datenbasis zugeordnet ist, die zu vorgegebenen IP-Adressen der Sprachpakete definiert, welche auszuführenden Manipulationen durch eine Sprachverarbeitungsfunktionen an den betreffenden Sprachpaketen auszuführen sind;
ist ein Verfahren geschaffen, das aufgrund der gewünschten Verkehrsbeziehung eine gezielte Manipulation der Sprachpakete erlaubt, dies wird durch einen vergleich der gespeicherten IP-Adressen mit den IP-Adressen der jeweils ankommenden Sprachpakete vorgenommen.

Ein Ausführungsbeispiel der Erfindung wird nachfolgend anhand der Zeichnungen näher erläutert. Dabei zeigen:
- Figur 1: Router mit Border Gateway Funktionen zur Vernetzung von IP-basierten Netzen gemäss dem Stand der Technik;
- Figur 2: Application Level Gateway mit IP-Forwarding;
- Figur 3: Application Level Gateway ohne IP-Forwarding;
- Figur 4: Zustandsdiagramm der Verfahrensvorschrift auf dem IP-Layer.

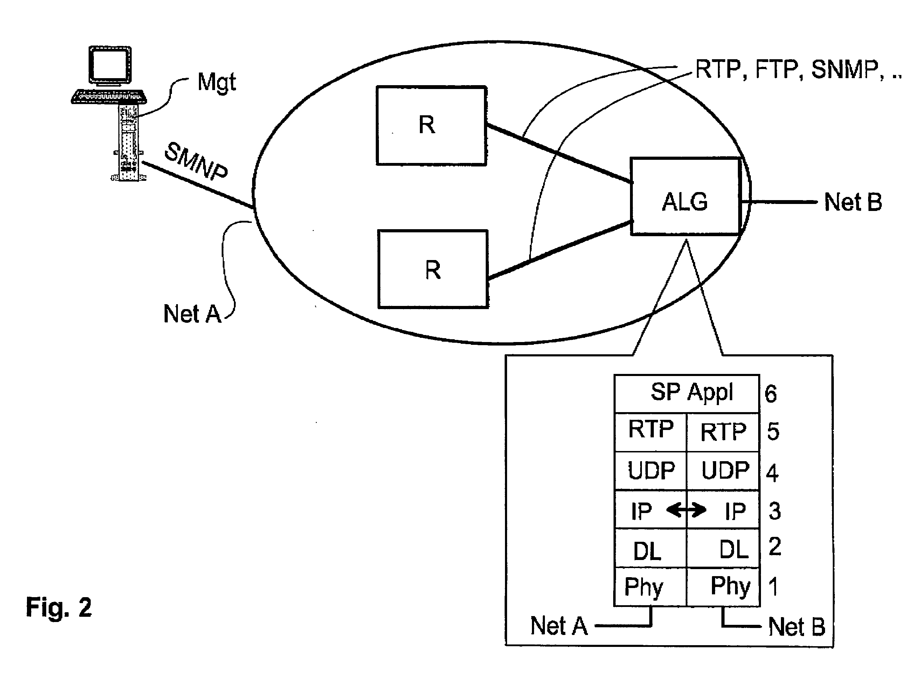

Ein erstes Ausführungsbeispiel der Erfindung wird nun anhand der Figuren 2 bis 3 erläutert.

Gemäss der Figur 2 verfügt das Application Level Gateway ALG über eine Anwendung genannt Sprachverarbeitungsfunktion oder «Speeech-Processing», die in der Lage ist, verschiedene Arten von Manipulationen an den Sprachpaketen durchzuführen; eine via Netzmanagement Mgt eingebrachte Tabelle enthält die durch die Destination IP-Adresse definierten Ziele und die Signal Processing Funktionen, die an den betreffenden Sprachpaketen angewendet werden müssen. Dazu verfügt das Application Level Gateway ALG in jedem der angeschlossenen IP basierten Netze einen vollständigen RTP/UDP/IP Protokoll-Stack. Auf dem IP-Layer verfügt das Application Level Gateway ALG über eine Verfahrens(Routing)-Vorschrift, die beschreibt, dass alle nicht RTP-Pakete direkt ins entsprechende IP basierte Netz weitergeleitet werden. Die direkte Weiterleitung, das sogenannte IP-Forwarding ist in der Figur 2 auf Schicht 3 mit einem Doppelpfeil symbolisch dargestellt. Die vorerwähnte Routing-Vorschrift legt weiter fest, dass alle RTP-Pakete plus die IP-Source und IP-Destination Adressen der Anwendung «Speech-Processing» zugestellt werden müssen. Nach der Manipulation an den Sprachpaketen übergibt die Anwendung «Sprach-Processing» die Protokoll Data Unit PDU plus die IP-Source und IP-Destination Adressen an den RTP/UDP/IP Protokoll Stack zum weiterleiten ins entsprechende Netz.

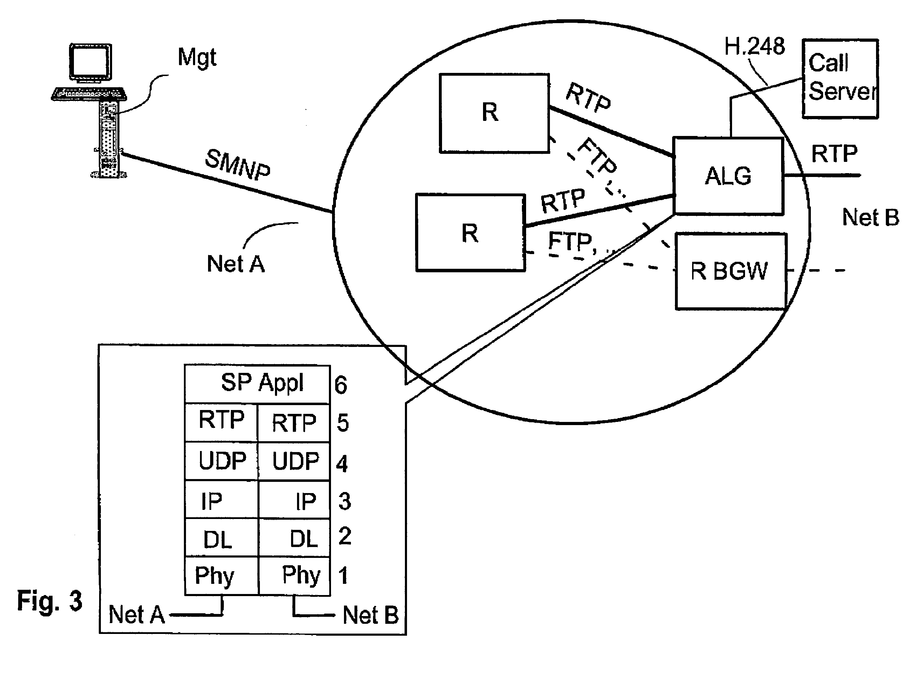

Demgegenüber ist im zweiten Ausführungsbeispiel gemäss der Figur 3 die Routing-Vorschrift auf dem IP-Layer nicht vorhanden, da nur RTP-Pakete, die einer Manipulation bedürfen, dem ALG direkt zugestellt werden. Alle nicht RTP-Pakete und alle RTP-Pakete von Verkehrbeziehungen, die keiner Bearbeitung der Sprachpakete unterliegen, werden von den Routern R dem entsprechenen Border-Gateway BGW zugeführt, das heisst: Das IP-Gateway ist in ein Application Gateway ALG und in ein Border Gateway BGW gegliedert. Das Application Gateway ALG weist gegenüber dem Application Gateway ALG gemäss dem ersten Ausführungsbeispiel keine IP-Forwarding auf. In Figur 3 ist in einer weiteren Ausführungsform zur zweiten Ausführungsform ein Call Server vorgesehen, der über ein Protokoll, z.B. basierend auf H.248 mit dem Application Level Gateway ALG verbunden ist. Dadurch ist eine dynamische, verbindungsindividuelle Manipulation der Sprachpakete im IP-Gateway bzw. im Application Level Gateway ALG möglich. Die Angabe H.248 (ITU-T) steht für eine ganze Familie von Recommendations zu «Gateway control protocols».

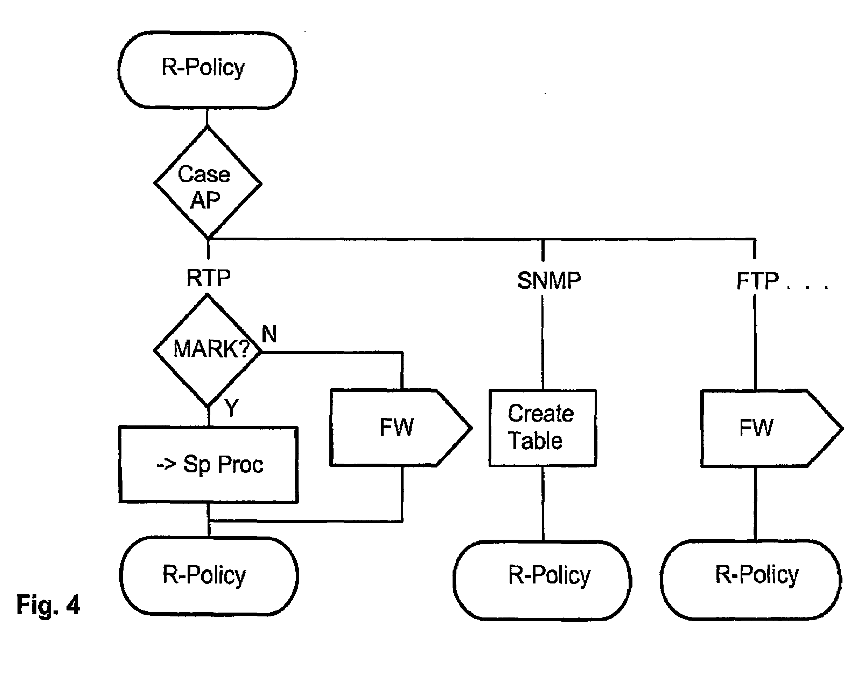

Die vorerwähnten Arten der Behandlung der Sprachpakete ist in Figur 4 anhand eines Zustandsdiagramm dargestellt. Mit «R-Policy» ist der Ausgangszustand der Routingvorschrift bezeichnet. Abhängig vom Paket, d.h. ob ein RTP- oder ein SNMP oder ein anderes Paketes vorliegt, erfolgt die Verarbeitung der entsprechenden Pakete. Im Fall «FTP, ...» erfolgt die direkte Weiterleitung FW. Im Fall RTP-Paket wird anschliessend geprüft, ob für die betreffende Adresse ein Eintrag in der Tabelle Routing-Vorschrift enthalten ist. Dies ist in der Figur mit der Abfrage «Mark» dargestellt. Für den Fall Y, d.h. es ist eine Manipulation auszuführen, erfolgt die Übergabe «→ Sp Proc»des Sprachpaketes an die Anwendung «Speech-Processing», wie dies vorstehend zum 1. Ausführungsbeispiel im einzeln angegeben ist. Für den Fall «SNMP» erfolgt die Schaffung und Speicherung einer Tabelle gemäss der nachfolgend angegebenen beispielhaften Struktur.

| **Ziel, Destination** | **Transcoding** | **Paketierung** | **TFO** | **Level gain control** |
|---|---|---|---|---|
| Dest1 | Codec A → Codec B | 20 ms → 10 ms | - | x1 dB |
| Dest2 | - | 20 ms → 10 ms | X | x2 dB |
| Dest3 | Codec A → Codec C | - | - | x3 dB |
| Dest4 | - | 20 ms → 10 ms | - | x4 dB |

Diese Tabelle wird via Netzmanagement Mgt mittels des Protokolls SNMP in das Application Gateway ALG eingebracht. Unter Ziel, Destination sind vorgegebene bzw. entsprechende IP-Adressen eingetragen. Mit z.B. x3=0 dB erfolgt keine Pegelanpassung bzw. eine Pegelanpassung mit dem Faktor 1.

### Liste der verwendeten Abkürzungen und Bezugszeichen

- ALG: Application Level Gateway
- BGP: Border Gateway Protocol
- BGW: Border Gateway
- DL: Data Link Layer
- FW: Forwarding
- IP: Internet Protocol
- Mgt: Netzmanagement
- PDU: Protocol Data Unit
- Phy: Physical Layer
- QoS: Quality of Service
- R: Router
- RFC: Request for Comment

- RTP: Real Time Transfer Protocol
- SNMP: Simple Network Management Protocol
- TFO: Tandem free Operation
- UDP: User Datagram Protocol
- VBD: Voice Band Data

### Literaturverzeichnis

[1] Network Working Group
   Request for Comments: 1771
   Obsoletes: 1654
   Category: Standards Track
   Y. Rekhter T.J. Watson Research Center, IBM Corp. T. Li cisco Systems Editors March 1995
   A Border Gateway Protocol 4 (BGP-4)
[2] Network Working
   Group Request for Comments: 1772
   Obsoletes: 1655
   Category: Standards Track
   Y. Rekhter T.J. Watson Research Center, IBM Corp. P. Gross MCI Editors March 1995
   Application of the Border Gateway Protocol in the Internet

## Patentansprüche

1. Verfahren zur Manipulation von Sprachpaketen in einem IP-Gateway (BGW), das in einem ersten IP-Netz (Net A, Net B, ..) für den Netzübergang zu einem anderen IP-Netz (Net A, Net B, ..) eingefügt ist und wobei das IP-Gateway (BGW) einen unvollständigen Protokoll-Stack bis zum IP-Layer aufweist,
**dadurch gekennzeichnet, dass**
dem IP-Gateway (ALG, BGW) eine Datenbasis zugeordnet ist, die zu vorgegebenen IP-Adressen definiert, welche auszuführenden Manipulationen durch eine Sprachverarbeitungsfunktionen an den betreffenden Sprachpaketen auszuführen sind.

2. Verfahren nach Anspruch 1,
**dadurch gekennzeichnet, dass**
die Datenbasis durch ein Network-Management (Mgt)über das Protokoll SNMP für das IP-Gateway konfiguriert wird.

3. Verfahren nach Anspruch 2,
**dadurch gekennzeichnet, dass**
im IP-Gateway (ALG, BGW) ein vollständiger Protokoll-Stack implementiert ist mit den Schichten UDP und RTP; wobei alle nicht-RTP-Pakete direkt in ein anderes IP-Netz auf der Schicht IP-Layer weitergeleitet werden.

4. Verfahren nach Anspruch 3,
**dadurch gekennzeichnet, dass**
das IP-Gateway (ALG, BGW) in ein Application Level Gateway (ALG) und in ein Bordergateway (BGW) gegliedert ist und dass nicht-RTP-Pakete direkt zum Bordergateway (BGW) geleitet werden.

5. Verfahren nach einem der Ansprüche 1 bis 4,
**dadurch gekennzeichnet, dass**
folgende Manipulationen ausgeführt werden:
- Transkodierung und/oder
- Aenderung der Paketierung und/oder
- Pegelanpassung und/oder
- Erkennung des Tandem Free Operation Protokolls.

6. Verfahren nach einem der Ansprüche 1 bis 5,
**dadurch gekennzeichnet, dass**
die Datenbasis im IP-Gateway (ALG, BGW) enthalten ist.

7. Verfahren nach einem der Ansprüche 1 bis 5,
**dadurch gekennzeichnet, dass**
ein Call Server vorgesehen ist, der mit dem IP-Gateway (ALG, BGW) verbunden ist und dass die auszuführenden Manipulationen der Sprachpakete verbindungsindividuell dem IP-Gateway (ALG, BGW) übermittelt werden.

8. Verfahren nach Anspruch 7,
**dadurch gekennzeichnet, dass**
die für die Übermittlung der auszuführenden Manipulationen zwischen Call Server und IP-Gateway (ALG, BGW) ein Protokoll basierend auf der Empfehlung H.248 eingesetzt ist.

## Geänderte Patentansprüche

### Geänderte Patentansprüche gemäss Regel 86(2) EPÜ.

**1.** Verfahren zur Manipulation von Sprachpaketen in einem IP-Gateway (BGW), das in einem ersten IP-Netz (Net A, Net B, ..) für den Netzübergang zu einem anderen IP-Netz (Net A, Net B, ..) eingefügt ist und wobei das IP-Gateway (BGW) einen Protokoll-Stack bis zum IP-Layer aufweist,
**dadurch gekennzeichnet, dass**
dem IP-Gateway (ALG, BGW) eine Datenbasis zugeordnet ist, die zu vorgegebenen IP-Adressen definiert, welche auszuführenden Manipulationen durch eine Sprachverarbeitungsfunktionen (SP Appl) an den betreffenden Sprachpaketen auszuführen sind.

**2.** Verfahren nach Anspruch 1,
**dadurch gekennzeichnet, dass**
die Datenbasis durch ein Network-Management (Mgt)über das Protokoll SNMP für das IP-Gateway konfiguriert wird.

**3.** Verfahren nach Anspruch 2,
**dadurch gekennzeichnet, dass**
im IP-Gateway (ALG, BGW) ein Protokoll-Stack implementiert mit den Schichten UDP und RTP ist, wobei alle nicht-RTP-Pakete direkt in ein anderes IP-Netz auf der Schicht IP-Layer weitergeleitet werden.

**4.** Verfahren nach Anspruch 3,
**dadurch gekennzeichnet, dass**
das IP-Gateway (ALG, BGW) in ein Application Level Gateway (ALG) und in ein Bordergateway (BGW) gegliedert ist und dass nicht-RTP-Pakete direkt zum Bordergateway (BGW) geleitet werden.

**5.** Verfahren nach einem der Ansprüche 1 bis 4,
**dadurch gekennzeichnet, dass**
folgende Manipulationen ausgeführt werden:
- Transkodierung und/oder
- Aenderung der Paketierung und/oder
- Pegelanpassung und/oder
- Erkennung des Tandem Free Operation Protokolls.

**6.** Verfahren nach einem der Ansprüche 1 bis 5,
**dadurch gekennzeichnet, dass**
die Datenbasis im IP-Gateway (ALG, BGW) enthalten ist.

**7.** Verfahren nach einem der Ansprüche 1 bis 5,
**dadurch gekennzeichnet, dass**
ein Call Server vorgesehen ist, der mit dem IP-Gateway (ALG, BGW) verbunden ist und dass die auszuführenden Manipulationen der Sprachpakete verbindungsindividuell dem IP-Gateway (ALG, BGW) übermittelt werden.

**8.** Verfahren nach Anspruch 7,
**dadurch gekennzeichnet, dass**
die für die Übermittlung der auszuführenden Manipulationen zwischen Call Server und IP-Gateway (ALG, BGW) ein Protokoll basierend auf der Empfehlung H.248 eingesetzt ist.

**9.** Verfahren nach Anspruch 3 oder 4,
**dadurch gekennzeichnet, dass**
die RTP-Pakete an die Sprachverarbeitungsfunktion (SP Appl) weitergeleitet werden, wo die in den RTP-Paketen enthaltene Sprachinformation gemäss der in der Datenbasis gespeicherten Definitionen manipuliert wird und anschliessend an die RTP-Schicht zur Uebertragung übergeben wird.
